# EUROPÄISCHE PATENTANMELDUNG

(11) **EP 2 571 235 A1**
(43) Veröffentlichungstag der Anmeldung: **20.03.2013**
(21) Anmeldenummer: 11007584.3
(22) Anmeldetag: 16.09.2011
(51) Int. Cl.: H04M 3/42

(54) **Verfahren und Einrichtung zur knotenuebergreifenden Nutzung von Gruppen-Leistungsmerkmalen in einem Kommunikationssystem**

(71) Anmelder: Siemens Enterprise Communications GmbH & Co. KG, 81379 München (DE)
(72) Erfinder: Rist, Claus, 44795 Bochum (DE); Schröter, Otto, 45307 Essen (DE); Willmann, Michael, 58454 Witten (DE); Kanaan, Steef, 58453 Witten (DE); Volkmann, Michael, 58313 Herdecke (DE); Glaser, Martin, 59192 Bergkamen (DE)
(74) Vertreter: Fritzsche, Thomas

(57) **Zusammenfassung**

Bei einem Verfahren zur knotenübergreifenden Nutzung von Gruppen-Leistungsmerkmalen in einem Kommunikationssystem erfolgt eine Signalisierung eines Zustandes an einem ersten Teilnehmergerätes (T11) in einem ersten Knoten (K1) von einem zweiten Teilnehmergerät (T2) an einem zweiten Knoten (K2) und eine Anzeige dieses Zustandes oder einer Änderung dieses Zustandes an dem ersten Teilnehmergerät mit Hilfe einer Anzeigeeinrichtung (A) in einer Weise erfolgt, die einem Benutzer des ersten Teilnehmergerätes die Möglichkeit gibt, das zweite Teilnehmergerät oder eine Gruppe von Teilnehmergeräten, der dieses zweite Teilnehmergerät angehört, durch Bedienung eines Eingabeelementes (E), das dieser Anzeigeeinrichtung zugeordnet ist, zu rufen oder einen für dieses zweite Teilnehmergerät oder für eine Gruppe von Teilnehmergeräten, der dieses zweite Teilnehmergerät angehört, ankommenden Anruf zu übernehmen.

## Beschreibung

Die Erfindung betrifft ein Verfahren und eine Einrichtung zur knotenübergreifenden Nutzung von Gruppen-Leistungsmerkmalen in einem Kommunikationssystem, insbesondere in einem Unternehmens-Telefon-Netzwerk.

In modernen Kommunikationssystemen wie beispielweise in digitalen Telefonanlagen sind für den Anschluss von Teilnehmergeräten (Endgeräten) wie beispielsweise leitungsgebundenen oder schnurlosen Telefonen geeignete Module vorgesehen. Mit Hilfe dieser Module werden Anrufe an die jeweiligen Endgeräte signalisiert und Verbindungen von einem rufenden zu einem gerufenen Endgerät geschaltet.

In zunehmendem Maße sind dabei einem Teilnehmer mehrere unterschiedliche oder gleiche Endgeräte zugeordnet, um beispielsweise an verschiedenen Orten oder durch ein schnurloses Telefon einen Anruf annehmen zu können. Diese Endgeräte eines Teilnehmers werden an ein spezielles Modul angeschlossen, bei dem die zugehörigen Telefone bzw. Endgeräte einer Leitung zugeordnet sind. Wird ein auf dieser Leitung ankommender Anruf durch eines der Endgeräte angenommen, d.h. eine Verbindung zum Endgerät des rufenden Teilnehmers geschaltet, so ist diese Leitung besetzt bzw. belegt und es kann kein weiterer Anruf bzw. keine weitere Verbindung über diese Leitung zu einem der weiteren Endgeräte des Teilnehmers gesteuert werden. Diese speziellen Module sind in der Fachwelt als Teammodule oder Gruppen-Module bekannt. Derartige Teammodule werden mit Hilfe eines Kommunikationsmoduls gesteuert, d.h. die entsprechenden Anrufe oder abgehenden Rufe werden vermittlungstechnisch durch dieses Kommunikationsmodul gesteuert. Hierzu ist ein Kommunikationsaustausch zwischen dem Teammodul und dem Kommunikationsmodul erforderlich.

Beispielsweise beschreibt die DE 10 2005 030 133 A1, deren Offenbarung hiermit ausdrücklich zum Bestandteil der Beschreibung der vorliegenden Erfindung gemacht wird, ein Verfahren und eine Kommunikationseinrichtung zum Signalisieren von vermittlungstechnischen Zuständen zwischen einem in einer Kommunikationseinrichtung vorgesehenen Teammodul, dem mehrere Endgeräte eines Teilnehmers zugeordnet sind, und einem das Teammodul vermittlungstechnisch steuernden Kommunikationsmodul, wobei im Teammodul die vermittlungstechnischen Zustände der Endgeräte des Teilnehmers erfasst werden. Hierbei wird im Teammodul und im Kommunikationsmodul den Endgeräten eines Teilnehmers ein logisches Endgerät zugeordnet. Aus den erfassten vermittlungstechnischen Zuständen der Endgeräte wird der vermittlungstechnische Zustand des Teilnehmers ermittelt und im logischen Endgerät des Teammoduls eingetragen. Dem Kommunikationsmodul wird der im logischen Endgerät eingetragene vermittlungstechnische Zustand des Teilnehmers signalisiert.

Die EP 1 404 091 B1 beschreibt ein Verfahren zur Steuerung und/oder Überwachung zumindest einer MULAP-Leitung einer Kommunikationsanlage durch eine Anwendung, wobei jeder MULAP-Leitung eine MULAP-Rufnummer zugeordnet ist und mehrere Endgeräte auf die MULAP-Leitungen zugreifen können. Bei diesem Verfahren wird jeder der MULAP-Leitungen jeweils ein Endgerät als Master-Endgerät zugeordnet. Die Anwendung versendet einen Auftrag für eine MULAP-Rufnummer an die Kommunikationsanlage, die Kommunikationsanlage setzt die MULAP-Rufnummer in die Endgeräte-Rufnummer des dieser MULAP-Leitung zugeordneten Master- Endgeräts um und führt den Auftrag für diese Endgeräte-Rufnummer aus, wobei alle die MULAP-Leitung betreffenden Meldungen als die des Master-Endgeräts von der Kommunikationsanlage zur Anwendung als Meldungen dieser MULAP-Rufnummer gesendet werden.

Der vorliegenden Erfindung liegt die Aufgabe zu Grunde, eine technische Lehre zur Nutzung von Gruppen-Leistungsmerkmalen in einem Kommunikationssystem anzugeben, die eine knotenübergreifende Nutzung von Gruppen-Leistungsmerkmalen in einem Kommunikationssystem ermöglicht.

Diese Aufgabe wird durch ein Verfahren bzw. durch ein Erzeugnis nach einem der unabhängigen Patentansprüche gelöst. Die Unteransprüche sollen vorteilhafte Weiterbildungen der Erfindung unter Schutz stellen.

Erfindungsgemäß ist ein Verfahren zur knotenübergreifenden Nutzung von Gruppen-Leistungsmerkmalen in einem Kommunikationssystem vorgesehen, bei dem eine Signalisierung eines Zustandes eines ersten Teilnehmergerätes an einem ersten Knoten zu einem zweiten Teilnehmergerät an einem zweiten Knoten und eine Anzeige dieses Zustandes oder einer Änderung dieses Zustandes an dem zweiten Teilnehmergerät mit Hilfe einer Anzeigeeinrichtung in einer Weise erfolgt, die einem Benutzer des zweiten Teilnehmergerätes die Möglichkeit gibt, das erste Teilnehmergerät oder eine Gruppe von Teilnehmergeräten, der dieses erste Teilnehmergerät angehört, durch Bedienung eines Eingabeelementes, das dieser Anzeigeeinrichtung zugeordnet ist, zu rufen oder einen für dieses erste Teilnehmergerät oder für eine Gruppe von Teilnehmergeräten, der dieses erste Teilnehmergerät angehört, ankommenden Anruf auch aus einer Gruppe heraus zu übernehmen.

Im Zusammenhang mit der Beschreibung oder Charakterisierung der vorliegenden Erfindung ist unter einem Kommunikationssystem eine Struktur aus miteinander kommunizierenden kommunikationstechnischen Geräten, insbesondere Teilnehmergeräten (die gelegentlich auch als Endgeräte bezeichnet werden) und aus Netzwerkelementen (die gelegentlich auch als Netzelemente bezeichnet werden) zu verstehen. Wichtige Beispiele für Kommunikationssysteme in diesem Sinne sind private oder öffentliche Telekommunikationssysteme, insbesondere Telefonnetze, die insbesondere leitungsvermittelt, paketvermittelt, nachrichtenvermittelt, verbindungsorientiert oder verbindungslos, temporär, statisch oder permanent betrieben werden oder strukturiert sein können. Datenübertragung und Vermittlungstechnik erfolgen bzw. sind in diesen Kommunikationssystemen vorzugsweise oder ausschließlich in digitaler, insbesondere in elektrischer, elektronischer oder in opto-elektronischer Technik.

In diesem Zusammenhang ist unter einem Knoten oder Netzknoten oder Netzwerkknoten ein Netzwerkelement in einem Kommunikationssystem zu verstehen, über welches ein erstes Teilsystem dieses Kommunikationssystems, insbesondere eine Mehrzahl von Netzwerkelementen oder anderen kommunikationstechnischen Geräten, mit einem anderen Teilsystems dieses Kommunikationssystems oder mit einem anderen Kommunikationssystems verbindet. Wichtige Beispiele für Knoten in diesem Sinne sind Vermittlungsknoten in Telefonnetzen.

In diesem Zusammenhang ist unter einem Leistungsmerkmal ein durch das Kommunikationssystem oder durch wenigstens ein Netzwerkelement in diesem Kommunikationssystem zur Verfügung gestellter teilnehmerbezogener Dienst zu verstehen. Wichtige Beispiele für solche Leistungsmerkmale sind die Übermittlung und die Anzeige der Rufnummer (Rufnummernanzeige), die Unterdrückung der Übermittlung der Rufnummer, die Anzeige der Rufnummer des Angerufenen, die Übermittlung und die Anzeige kundenspezifischer Rufnummerninformationen, der Rückruf bei besetzt oder bei Nichtmelden, das Anklopfen, das Halten, die Rückfrage, das Makeln, die Dreierkonferenz, die Anrufweiterschaltung, das Umlegen und die Anrufbenachrichtigung.

Teilnehmergeräte können zu Gruppen zusammengefasst werden oder sein. Erfindungsgemäß sind insbesondere auch Gruppen vorgesehen, deren Teilnehmergeräte nicht alle an einen einzigen Knoten angeschlossen sind. Klingelt ein Telefon der Gruppe, kann man den Anruf mit einer Tastenkombination heranholen. Dieses Merkmal kann insbesondere dann genutzt werden, wenn der entsprechende Arbeitsplatz im Moment nicht besetzt ist. Die Zusammenfassung zu Gruppen findet vor allem bei größeren Firmen Verwendung, wenn nicht jeder jedes Gespräch heranholen darf. Ein Teilnehmer kann ein Telefonat durch eine Tastenkombination in der Nebenstelle halten. Ein so gehaltenes Gespräch kann anschließend von einem anderen oder vom selben Telefon über eine Tastenkombination weitergeführt werden. Wichtige Beispiele für Gruppen in diesem Sinne sind sogenannte MULAP-Gruppen.

Das Akronym MULAP steht dabei für den Begriff "Multiple Line Appearance", der dem Fachmann beispielsweise aus der EP 1 404 091 B1 bekannt ist. In derartigen Kommunikationssystemen kann von mehreren Endgeräten aus auf einen Teilnehmeranschluss zugegriffen werden. Solche Schaltungen werden häufig für Arbeitsgruppen verwendet, in denen jeder MitarbeiterAnrufe, die auf einer bestimmten Leitung ankommen, entgegennehmen kann. Dabei sind auf jedem Endgerät meist mehrere solcher MULAP-Leitungen aufgeschaltet, die von internen und externen Teilnehmern unter den jeweiligen Rufnummern (die sog. MULAP-Nummern) erreichbar sind. So können beispielsweise in einer Vertriebsabteilung eines Unternehmens separate MULAP-Leitungen für Bestellanfragen, technische Informationen, Lieferauskünfte und das Rechnungswesen eingerichtet sein.

Jedes Endgerät, an dem diese MULAP-Leitungen verfügbar sind, hat dabei für jede Leitung eine Signalleuchte und eine Zugriffstaste (MULAP-Taste). Sobald ein Kunde auf einer der MULAP-Leitungen anruft, wird dieser Ruf an allen diesen Apparaten akustisch signalisiert, die der Leitung zugeordnete Leuchte blinkt und jeder Teilnehmer der Arbeitsgruppe kann durch Drücken der entsprechenden Taste den Anruf entgegennehmen. Umgekehrt kann der Mitarbeiter vor dem Wählen einer Rufnummer mit der MULAP-Taste gezielt eine bestimmte Leitung auswählen. Dieser Leitung werden dann beispielsweise die Gesprächsgebühren zugeordnet, die MULAP-Nummer dieser Leitung wird zum Angerufenen übermittelt und die Leitung wird während der Dauer des Gesprächs anderen Anrufern als "besetzt" signalisiert.

Mehrere Teilnehmergeräte können zu einer Rufgruppe zusammengefasst werden. Diese Rufgruppe ist von außen über eine Telefonnummer erreichbar. Dabei werden eingehende Anrufe nach bestimmten Regeln an einen internen Teilnehmer der Rufgruppe ("Agent" genannt) durchgestellt. Alle Teilnehmer der Gruppe haben die Möglichkeit, sich bei der Rufgruppe an- und abzumelden. Dieses Merkmal wird beispielsweise auch in Callcentern verwendet, damit man stets an einen freien Agenten durchgestellt wird. Auch besteht die Möglichkeit, eine gewisse Anzahl von Anrufern in einer Warteschleife zu halten, bis ein Agent frei ist. Hierdurch kann die akustische Signalisierung in die optische Signalisierung wechseln.

In diesem Zusammenhang ist unter einem Gruppen-Leistungsmerkmal ein durch das Kommunikationssystem oder durch wenigstens ein Netzwerkelement in diesem Kommunikationssystem für die Mitglieder einer Gruppe zur Verfügung gestellter teilnehmerbezogener Dienst zu verstehen. Wichtige Beispiele für solche Leistungsmerkmale sind die Signalisierung vermittlungstechnischer Zustände insbesondere von Teilnehmergeräten innerhalb der Gruppe, wobei die Signalisierung vorzugsweise über eine Anzeigeeinrichtung, beispielsweise über eine LED erfolgen kann, die in ein entsprechend programmiertes oder konfiguriertes Eingabeelement (oder Eingabeeinrichtung), vorzugsweise eine Taste, eines Teilnehmergerätes eingebaut oder dieser zugeordnet ist. Der Fachmann spricht in diesem Zusammenhang von einer "Presence anzeigenden DSS-Taste" oder auch von einer Namenstaste. Ein Netzelement des Kommunikationssystems, beispielsweise ein Knoten hinterlegt auf dieser Taste die Rufnummer des programmierten Teilnehmers.

Auf diese Weise können beispielsweise folgende vermittlungstechnische Zustände beispielsweise über die LEDs an den entsprechend programmierten DSS-Tasten signalisiert werden:
- Teilnehmer ist frei -> die LED ist aus
- Teilnehmer wird gerufen -> die LED blinkt
- Teilnehmer ist besetzt ( z.B. führt ein Gespräch) -> die LED ist an

Andere wichtige Beispiele für solche Leistungsmerkmale sind das Rufen eines Teilnehmers oder die Übernahme eines Gesprächs von einem Teilnehmer per Tastendruck.

In diesem Zusammenhang ist unter der zur knotenübergreifenden Nutzung von Gruppen-Leistungsmerkmalen eine Nutzung von Gruppen-Leistungsmerkmalen durch Geräte, insbesondere durch Teilnehmergeräte, oder Teilnehmer in diesem Kommunikationssystem zu verstehen, bei der nicht alle an dieser Nutzung von Gruppen-Leistungsmerkmalen beteiligten Geräte oder Teilnehmer über einen einzigen Knoten miteinander oder mit anderen Teilsystemen des Kommunikationssystems kommunizieren.

In diesem Zusammenhang ist unter einem Teilnehmergerät ein Gerät in einem Kommunikationssystem zu verstehen, das Teilnehmer zur Kommunikation in diesem Kommunikationssystem verwenden. Wichtige Beispiele für Teilnehmergeräte sind Telefone, Computer mit Telefoniefunktion oder andere zur Kommunikation geeignete Endgeräte (z.B. sog. Kommunikationsendgeräte).

In diesem Zusammenhang ist unter einem Zustand eines Teilnehmergerätes ein (insbesondere vermittlungstechnischer) Zustand der Hardware und/ oder der Software dieses Teilnehmergerätes zu verstehen.

In diesem Zusammenhang ist unter einer Anzeigeeinrichtung eine Einrichtung zur Anzeige von Informationen, insbesondere von Zuständen wenigstens eines Teilnehmergerätes zu verstehen. Wichtige Beispiele für Anzeigeeinrichtungen sind Leuchtdioden (LED), Tongeneratoren, Bildschirme (sog. "Disptays") in unterschiedlichen Technologien (LED, LCD, etc.) oder andere Anzeigeeinrichtungen.

In diesem Zusammenhang ist unter einem Eingabeelement eine Einrichtung zu verstehen, mit deren Hilfe ein Teilnehmer eine Information in ein Gerät eingeben kann. Wichtige Beispiele für solche Eingabeelemente sind Tasten, Tastaturen, berührungsempfindliche Bildschirme (sog. "Touch Screens"), Photosensoren, Schallsensoren, kapazitive Sensoren oder ähnliche Einrichtungen.

In diesem Zusammenhang ist unter einem bei einem ersten Gerät in dem Kommunikationssystem oder bei einer Gruppe solcher Geräte ankommenden Anruf ein Anruf eines anderen Teilnehmers, insbesondere eine von einem anderen Teilnehmer ausgehende Signalisierung zu verstehen, der bzw. die von einem anderen Gerät ausgeht und dem Aufbau einer Kommunikation, insbesondere dem Austausch von Daten, mit dem ersten Gerät oder mit einem Gerät dieser Gruppe dient.

Gemäß einer bevorzugten Ausführungsform der Erfindung, deren Merkmale auch mit Merkmalen anderer Ausführungsformen kombiniert werden können, ist ein Verfahren zur knotenübergreifenden Nutzung von Gruppen-Leistungsmerkmalen in einem Kommunikationssystem vorgesehen, bei dem die knotenübergreifende Signalisierung über einen Presence Manager (PM) erfolgt. Diese Ausführungsform ist mit dem Vorteil verbunden, dass sie sich in vielen Fällen bereits vorhandene Komponenten, wie z.B. ein CSTA-Interface, wie es beispielsweise aus der Patentschrift US 6,985,575 B2 der Siemens Aktiengesellschaft bekannt ist, die hiermit ausdrücklich zum Bestandteil der vorliegenden Beschreibung gemacht wird, zu Nutze machen kann und somit auf jedem Server (hier: "Presence Manager" genannt), der ein solches Interface besitzt, eingesetzt werden kann.

Gemäß einer weiteren bevorzugten Ausführungsform der Erfindung, deren Merkmale auch mit Merkmalen anderer Ausführungsformen kombiniert werden können, ist ein Verfahren zur knotenübergreifenden Nutzung von Gruppen-Leistungsmerkmalen in einem Kommunikationssystem vorgesehen, bei dem der Presence Manager zur knotenübergreifenden Signalisierung anhand
- eines Ereignisses, welches ihm mit Hilfe einer Protokollspezifikation (CSTA) für den Datenverkehr zwischen wenigstens einer Telefonanlage und wenigstens einem auf einem Server des Kommunikationssystems laufenden Computerprogramm gemeldet wird, und
- anhand wenigstens eines Zustandes wenigstens eines der beteiligten Teilnehmergeräte, prüft, ob wenigstens ein Zustand wenigstens einer Anzeigeeinrichtung wenigstens eines Teilnehmerendgerätes zu verändern ist.

Gemäß einer weiteren bevorzugten Ausführungsform der Erfindung, deren Merkmale auch mit Merkmalen anderer Ausführungsformen kombiniert werden können, ist ein Verfahren zur knotenübergreifenden Nutzung von Gruppen-Leistungsmerkmalen in einem Kommunikationssystem vorgesehen, bei dem bei der Signalisierung nicht oder nicht nur physikalische sondern ausschließlich oder auch logische Identifikatoren übermittelt werden.

Neben der Signalisierung des Teilnehmerzustandes erlaubt dieses Verfahren auch eine Gesprächsübernahme-Funktionalität (Call Pickup). Die Bedeutung des Tastendrucks wird von Seiten des Presence Managers ermittelt, und die entsprechende Systemreaktion zur Gesprächsübernahme wird damit veranlasst.

Vorzugsweise ist erfindungsgemäß eine Notfall-Behandlung vorgesehen, falls der Presence Manager nicht zur Verfügung steht. Hierbei sind ausgehende Rufe ohne LED Signalisierung möglich.

Die vorteilhafte Übertragung von physikalischen und logischen Informationen mittels üblicherweise rein physikalischer Elemente (vorzugsweise mittels "CSTA Button Press Event") erlaubt es Applikationen, nun auf die physikalischen Einheiten komplexer logischen Abstraktionen (hier: MULAP) zuzugreifen und dieses unter Ausnutzung von existierenden Transportmitteln im Netzverbund zu übertragen und somit knotenübergreifend für vermittlungstechnische Dienste, beispielsweise eine Gesprächsübernahme ("Call Pickup") zur Verfügung zu stellen.

Es ergeben sich hierdurch weitere Vorteile in der Funktionalität und im Hinblick auf die Benutzeroberfläche. Es erfolgt eine durch LED und Tasten unterstützte Signalisierung von knotenübergreifenden Gesprächen an MULAP Endgeräten.

Darüber hinaus ergeben sich Vorteile in der Implementierung. Die erfindungsgemäße Lösung eignet sich für jeden Endgerätetyp, für den CSTA Implementierungen möglich sind. Weiterhin bleibt die Richtung des Anrufes (ankommendes Gespräch) nach der Gesprächsübernahme bestehen und die Knoten sind direkt ohne Transitschaltung miteinander verbunden.

Gemäß einer weiteren bevorzugten Ausführungsform der Erfindung, deren Merkmale auch mit Merkmalen anderer Ausführungsformen kombiniert werden können, ist ein Verfahren zur knotenübergreifenden Nutzung von Gruppen-Leistungsmerkmalen in einem Kommunikationssystem vorgesehen, bei dem eine Anzeigeeinrichtung verwendet wird, die in eine Baugruppe integriert ist, die auch ein Eingabeelement umfasst. Auf diese Weise kann der häufig sehr beschränkte verfügbare Platz auf den für die Anbringung von Bedienelementen vorgesehenen Oberflächen von Teilnehmergeräten vorteilhaft genutzt werden. Die Zuordnung zwischen Anzeigeeinrichtung und Eingabeelement wird für den Benutzer in augenfälliger Weise dargestellt, was für eine korrekte Bedienung auch durch unkundige Teilnehmer vorteilhaft ist.

Gemäß einer weiteren bevorzugten Ausführungsform der Erfindung, deren Merkmale auch mit Merkmalen anderer Ausführungsformen kombiniert werden können, ist ein Verfahren zur knotenübergreifenden Nutzung von Gruppen-Leistungsmerkmalen in einem Kommunikationssystem vorgesehen, bei dem die Anzeigeeinrichtung eine LED und das Eingabeelement eine Taste mit integrierter oder zugeordneter LED ist.

Es stellt für den Benutzer dieser Ausführungsform der Erfindung einen wesentlichen Vorteil dar, dass die für ihn gewohnte Funktionalität der LED-Signalisierung der DSS-Tasten von und für MULAP und für deren Teilnehmer erfindungsgemäß in einem Anlagenverbund und knotenübergreifend unterstützt wird. Das Akronym DSS steht dabei für "Direct Station Select". Die frei belegbaren Funktionstasten an einem entsprechend ausgerüsteten Endgerät (oder auf Beistellgeräten) können unter anderem als DSS-Tasten eingerichtet werden. Dabei werden die dafür vorgesehenen Tasten mit der Rufnummer eines internen Teilnehmers, einer Teilnehmer- Gruppe programmiert. Anhand der zugehörigen LED ist der Gesprächszustand des jeweiligen Teilnehmers ersichtlich. Das Drücken einer solchen Taste bewirkt zustandsabhängig, dass ein sofortiger Ruf zum Ziel-Teilnehmer generiert (Direktruf) oder das Gespräch übernommen wird.

Erfindungsgemäß ist ferner eine Einrichtung zur Durchführung eines Verfahrens oder zur Teilnahme an einem Verfahren zur knotenübergreifenden Nutzung von Gruppen-Leistungsmerkmalen in einem Kommunikationssystem gemäß einer der beschriebenen Ausführungsformen der Erfindung oder gemäß einer weiteren Ausführungsform der Erfindung vorgesehen.

Gemäß einer weiteren bevorzugten Ausführungsform der Erfindung, deren Merkmale auch mit Merkmalen anderer Ausführungsformen kombiniert werden können, ist eine Einrichtung zur Durchführung eines Verfahrens oder zur Teilnahme an einem Verfahren zur knotenübergreifenden Nutzung von Gruppen-Leistungsmerkmalen in einem Kommunikationssystem gemäß einer der beschriebenen Ausführungsformen der Erfindung oder gemäß einer weiteren Ausführungsform der Erfindung vorgesehen, bei der eine Anzeigeeinrichtung vorgesehen ist, die in eine Baugruppe integriert ist, die auch ein Eingabeelement umfasst. Auf diese Weise kann der häufig sehr beschränkte verfügbare Platz auf den für die Anbringung von Bedienelementen vorgesehenen Oberflächen von Teilnehmergeräten vorteilhaft genutzt werden. Die Zuordnung zwischen Anzeigeeinrichtung und Eingabeelement wird für den Benutzer in augenfälliger Weise dargestellt, was für eine korrekte Bedienung auch durch unkundige Teilnehmer vorteilhaft ist.

Vorzugsweise ist die Anzeigeeinrichtung eine LED und das Eingabeelement eine Taste mit integrierter oder zugeordneter LED. Besonders vorzugsweise ist diese Einrichtung ein Teilnehmergerät.

Im Folgenden wird die Erfindung anhand von bevorzugten Ausführungsbeispielen mithilfe von Figuren näher beschrieben. Dabei zeigt
- Figur 1: in schematischer Weise einen Verbund von Knoten in einer LAN-Umgebung gemäß einem bevorzugten Ausführungsbeispiel der Erfindung;
- Fig. 2a und 2b: in schematischer Weise das Tastenfeld von zwei Teilnehmergeräten gemäß einem bevorzugten Ausführungsbeispiel der Erfindung;
- Figur 3: in schematischer Weise Einzelheiten der Konfiguration einer ersten Gruppe eines ersten Knotens gemäß einem bevorzugten Ausführungsbeispiel der Erfindung;
- Fig. 4 und 5: in schematischer Weise den Nachrichtenfluss in einem Kommunikationssystem gemäß einem bevorzugten Ausführungsbeispiel der Erfindung.

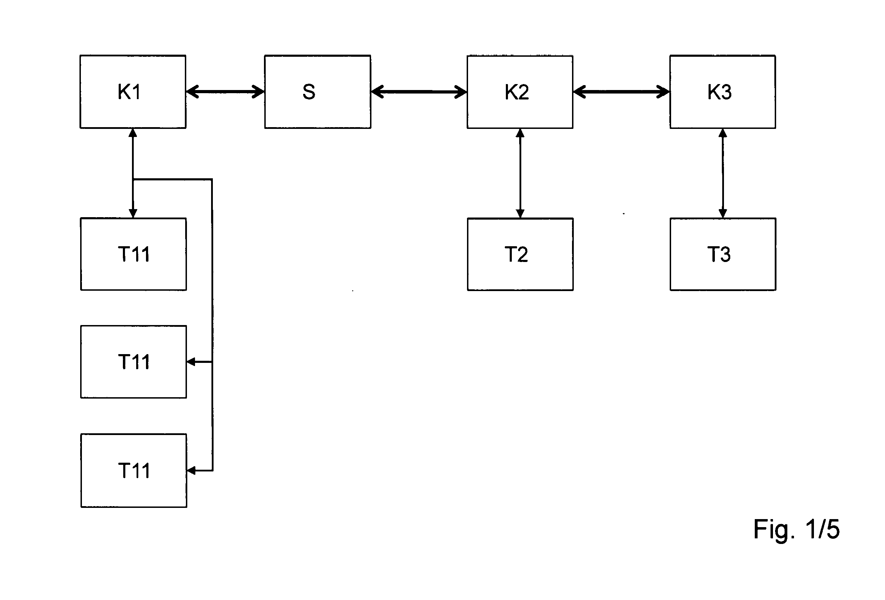

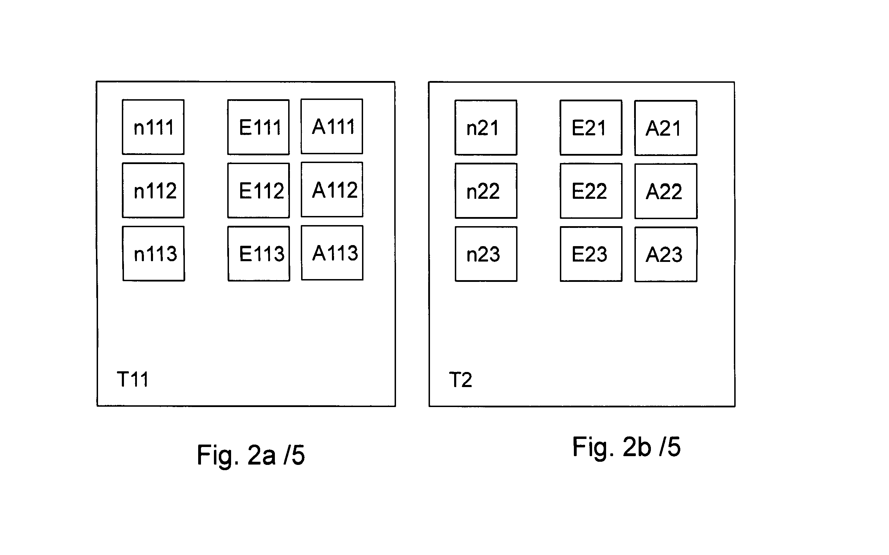

In der Figur 1 ist ein Verbund von Knoten K1, K2 und K3 in einer LAN-Umgebung dargestellt. Die Teilnehmergeräte T11, T12 und T13 bilden die Gruppe "MULAP 1" und sind über den Knoten K1 an das Kommunikationssystem angeschlossen. Die Teilnehmer T2 und T3 gehören in diesem Beispiel keiner (dargestellten) Gruppe an und sind über die Knoten K2 bzw. K3 an das Kommunikationssystem angeschlossen. Auf dem Server (S) läuft der Presence Manager. Voraussetzung für die bestimmungsgemäße Funktion des Presence Manager im Zusammenhang dieses Ausführungsbeispiels ist die Programmierung der Rufnummern der Gruppe "MULAP 1" aus Knoten 1 bei den Teilnehmern in Knoten 2 und Knoten 3, in diesem Beispiel T2 bzw. T3, und umgekehrt. Figur 2a zeigt das Tastenfeld des Teilnehmergerätes T11 mit den Namensschildern n111, n112 und n113, denen die Eingabeelemente E111, E112 und E113 sowie die Anzeigeeinrichtungen A111, A112 und A113 zugeordnet sind. Figur 2b zeigt das Tastenfeld des Teilnehmergerätes T2 mit den Namensschildern n21, n22 und n23, denen die Eingabeelemente E21, E22 und E23 sowie die Anzeigeeinrichtungen A21, A22 und A23 zugeordnet sind.

Ändert sich bei der Gruppe MULAP 1 ein vermittlungstechnischer Zustand, wie zum Beispiel durch Abheben der Handapparates eines der Teilnehmergeräte T11 oder T12, wird dies gemäß einem bevorzugten Ausführungsbeispiel der vorliegenden Erfindung durch ständiges Leuchten der Anzeigeeinrichtung E, beispielsweise einer LED beim Teilnehmer T2 knotenübergreifend signalisiert. Ebenso erfolgt diese Signalisierung bei den Teilnehmern T11, T12 und T13, wenn Teilnehmer T2 oder Teilnehmer T3 den Handapparat abnehmen oder im Gespräch sind.

Folgende Signalisierungsarten sind hierbei u.a. möglich:
- Teilnehmer ist frei -> die LED ist aus
- Teilnehmer wird gerufen -> die LED blinkt
- Teilnehmer ist besetzt ( z.B. führt ein Gespräch ) -> die LED ist an

Wird der Teilnehmer T2 oder Teilnehmer T3 gerufen, kann das Gespräch nun aus dem Netzverbund von einem auswählbaren Teilnehmer der Gruppe, also beispielsweise von einem der Teilnehmer T11, T12 und T13 übernommen werden.

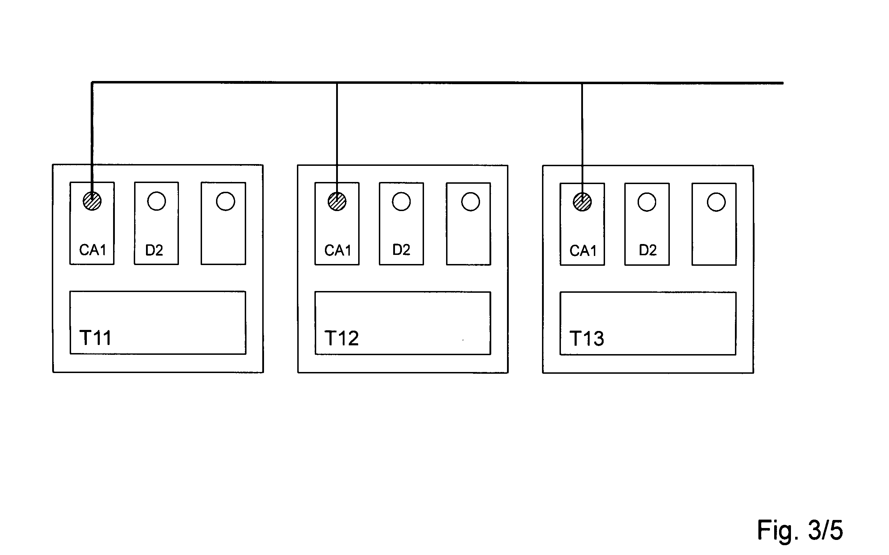

Figur 3 zeigt die Konfiguration der Gruppe "MULAP 1" aus Knoten 1 im Detail. Die Gruppe "MULAP 1" besteht aus 3 physikalischen Teilnehmern T11, T12 und T13, wobei die Teilnehmer T11 und T12 bei Rufen für die Gruppe "MULAP 1" akustisch und Teilnehmer T13 nur optisch signalisiert werden. Teilnehmer T11 belegt die Gruppe "MULAP 1" bei einem ankommenden Ruf (Call Appearance - CA) automatisch. Er nimmt eine Funktion eines Gruppen-Masters ("MULAP Master") war; Teilnehmer T11 und T13 können die Gruppe "MULAP 1" manuell belegen.

Figur 3 zeigt exemplarisch die Konfiguration einer Gruppe (MULAP) im Detail. Die Gruppe (MULAP) besteht aus 3 physikalischen Teilnehmern T11, T12 und T13, wobei die Teilnehmer T11 und T12 bei Rufen für die Gruppe (MULAP) akustisch und Teilnehmer T13 nur optisch signalisiert werden. Teilnehmer T11 belegt die Gruppe (MULAP) (Call 11 Appearance - CA) bei einem ankommenden Ruf automatisch. Teilnehmer T11 nimmt die Funktion eines Gruppen-Masters ("MULAP Master") war; Teilnehmer T12 und T13 können die Gruppe (MULAP) manuell belegen. Die Belegung der Gruppe (MULAP) erfolgt exklusiv, d.h. nur ein Teilnehmer kann die Call Appearance belegen, die Gruppe ist mit der Belegung besetzt.

Die TeilnehmerT11, T12 und T13 haben zusätzlich den Teilnehmer D2 auf einer DSS Taste konfiguriert.

Im folgenden repräsentieren die Device N4 bis N7 die Leitungen der Vernetzung. Die Verbindungen innerhalb der Knoten werden als C1 bis C3 bezeichnet. Eine netzweite Übersicht erhält die Applikation (Presence Manager) über den globalen Parameter G1 (Global Call ID), der zwischen den Knoten ausgetauscht wird.

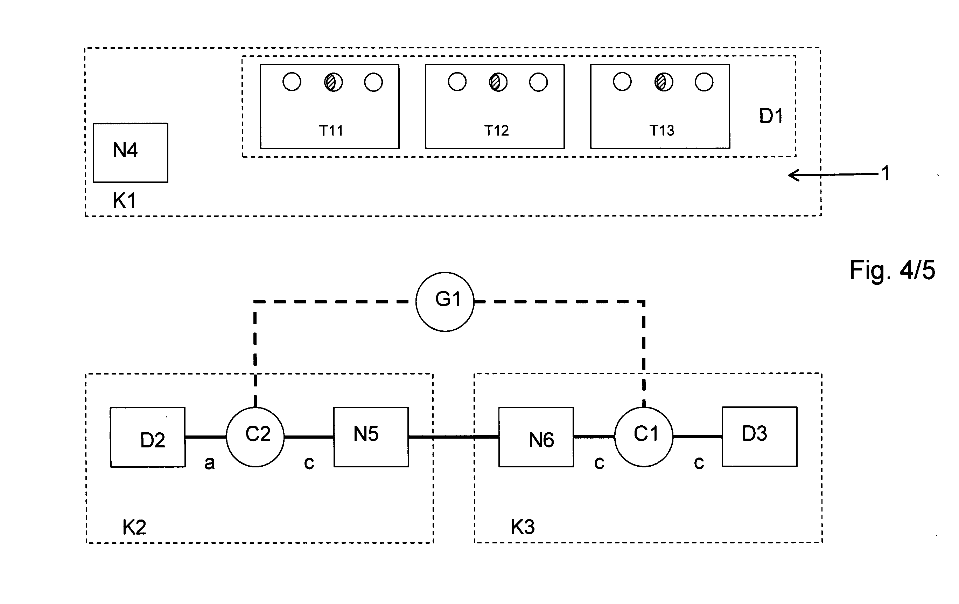

Figur 4 zeigt nun den Ruf von Teilnehmer D3 aus Knoten K3 an Teilnehmer D2 aus Knoten K2. Es erfolgt vorzugsweise über CSTA die knotenübergreifende Signalisierung zum Presence Manager. Dieser überprüft vorzugsweise anhand des CSTA Delivered Events und anhand der an den Endgeräten programmierten DSS-Tasten, welche LEDs nun vorzugsweise mittels SetLampMode (1) zu aktivieren sind (z.B.: die LEDs an den Teilnehmern T11, T12 und T13).

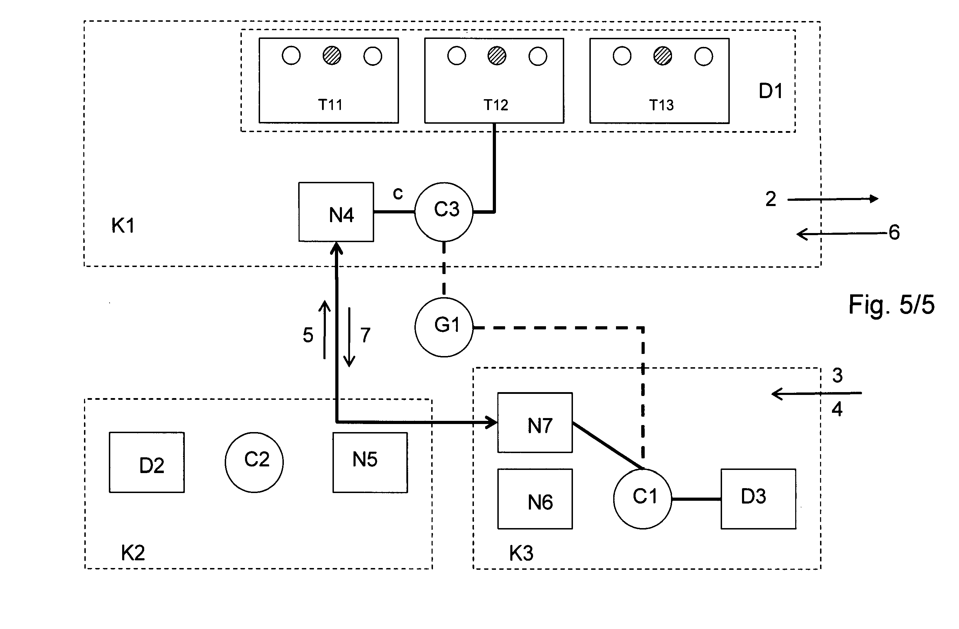

Figur 5 zeigt nun wie Teilnehmer T12 das Gespräch per Tastendruck zu übernehmen wünscht. Dazu enthält das zugehörige CSTA Button Press Event (2) nicht wie üblich lediglich die rein physikalische Information (hier: T12), sondern darüber hinaus nun vorteilhaft - hier repräsentativ für die Gruppe "MULAP 1" - ebenfalls die Call Appearance, welche der Teilnehmer T12 für dieses Gespräch belegen möchte.

Um eine MULAP bzw. deren Call Appearance über CSTA darzustellen wird vorzugsweise das sogenannte Switching Function Representation (SFR) Format der CSTA Device ID verwendet. Üblicherweise ist das Format wie folgt: N<DN!SA&CA/EXT%AID>NM (in dieser Reihenfolge - siehe ECMA-269).

Die Parameter "N<>" zeigen das SFR Format an. Für die Darstellung der MULAP werden die Paramater "DN" - wählbare Nummer und "/" - physikalisches Element genutzt.

Somit stellt sich die CSTA Device ID der MULAP als D1 und beispielsweise die CSTA Device ID des MULAP Teilnehmers T12 als N<D1/T12> dar.

Die ausgewählte Call Appearance wird nun in einer die Netzwerkressourcen schonenden Weise vorzugsweise über das bekannte "single system image"-Verfahren (3) der OpenScape Office bzw. HiPath 3000 Middleware unter Ausnutzung des globalen Parameters G1 auf den Knoten K3 abgesetzt (4). Die ausgewählte Call Appearance wird nun transparent über das Netzwerkprotokoll mit Aufforderungen zur automatischen Rufannahme an Knoten K1 übertragen (5). Damit wird in Knoten K1 nur der ausgewählte Teilnehmer T12 (6) angereizt und sofort ohne eine Transitschaltung über Knoten K2 verbunden (7). Alle anderen Gruppen-Teilnehmer werden bei der Belegung somit vorteilhaft nicht berücksichtigt.

Im folgenden werden die für das hier beschriebene Ausführungsbeispiel des erfindungsgemäßen Verfahrens wesentlichen Elemente der Meldungen (1) bis (7) detailliert beschrieben:
- Meldung (1): CSTA SetLampMode wird vorzugsweise gemäß ECMA-269 Kapitel 21.1.17 protokollkonform angewendet und vorzugsweise dazu verwendet, die LEDs der zugehörigen DSS-Tasten zu steuern.
- Meldung (2): CSTA ButtonPressEvent wird vorzugsweise gemäß ECMA-269 Kapitel 21.2.2 protokollkonform erweitert angewendet und vorzugsweise dazu verwendet, nun auch für die MULAP-Gruppe zu erkennen, welches Gerät ("physikalische Device") die MULAP Appearance zu belegen wünscht (hier findet somit vorzugsweise die Vorauswahl statt). Da das CSTA ButtonPressEvent eigentlich für Hardware (physikalisches Device) vorgesehen ist, wird hier der Standard vorzugsweise erweitert und auch für ein rein logisches Device (ohne Hardware) mit gleichzeitiger Zuordnung zum physikalischen Device angewendet. Die Zuordnung zwischen logischen und physikalischen Device erfolgt wiederum vorzugsweise gemäß ECMA-269 Kapitel 10.1.
- Meldung (3): CSTA DirectedPickupCall wird aus Sicht der Applikation (hier: Presence Manager) vorzugsweise gemäß ECMA-269 Kapitel 17.1.13 angewendet.
- Meldung (4): CSTA DeflectCall wird vorzugsweise gemäß ECMA-269 Kapitel 17.1.11 protokollkonform erweitert angewendet und vorzugsweise dazu verwendet, den Anruf ressourcenschonend direkt vom Knoten des Anrufers an den Knoten des Übernehmenden weiterzuleiten. Bekannte Methoden zur Indikation der sofortigen Rufannahme (autoAnswer) sorgen vorzugsweise für die direkte Gesprächsdurchschaltung. Erfindungsgemäß kann dieses Verfahren durch die vorteilhafte Nutzung von Meldung (5) auch für die Auswahl eines bestimmten physikalischen Devices in einem anderen Knoten angewendet werden. Die Auswahl eines logischen und physikalischen Device erfolgt wiederum vorzugsweise gemäß ECMA-269 Kapitel 10.1.
- Meldung (5): CorNet-NQ Setup enthält vorzugsweise neben der Adressierung des logischen Device mittels der Called Party Number nun vorzugsweise auch die Adressierung des auszuwählenden physikalischen Device in der Called Party Subaddress. Beide Informationselemente werden vorzugsweise protokollkonform angewendet.
- Meldung (6): Call Processing interne Rufanforderung ist eine systeminterne herstellerspezifische Meldung, die gemäß diesem Ausführungsbeispiel der vorliegenden Erfindung unter Anwendung der Called Party Subaddress vorzugsweise lediglich an das von dem anderen Knoten ausgewählte physikalische Device gesendet wird.
- Meldung (7): CorNet-NQ Connect enthält in bekannter und protokollkonformer Weise das logische Device in der Connected Number.

Die vorteilhafte Übertragung von physikalischen und logischen Informationen mittels üblicherweise rein physikalischer Elemente (hier: CSTA Button Press Event) erlaubt es Applikationen nun auf die physikalischen Einheiten komplexer logischen Abstraktionen (hier: MULAP) zuzugreifen und dieses unter Ausnutzung von existierenden Transportmitteln im Netzverbund zu übertragen und somit knotenübergreifend für vermittlungstechnische Dienste (hier: Call Pick Up) zur Verfügung zu stellen.

## Patentansprüche

1. Verfahren zur knotenübergreifenden Nutzung von Gruppen-Leistungsmerkmalen in einem Kommunikationssystem, bei dem eine Signalisierung eines Zustandes an einem ersten Teilnehmergerätes (T11) in einem ersten Knoten (K1) von einem zweiten Teilnehmergerät (T2) an einem zweiten Knoten (K2) und eine Anzeige dieses Zustandes oder einer Änderung dieses Zustandes an dem ersten Teilnehmergerät mit Hilfe einer Anzeigeeinrichtung (A) in einer Weise erfolgt, die einem Benutzer des ersten Teilnehmergerätes die Möglichkeit gibt, das zweite Teilnehmergerät oder eine Gruppe von Teilnehmergeräten, der dieses zweite Teilnehmergerät angehört, durch Bedienung eines Eingabeelementes (E), das dieser Anzeigeeinrichtung zugeordnet ist, zu rufen oder einen für dieses zweite Teilnehmergerät oder für eine Gruppe von Teilnehmergeräten, der dieses zweite Teilnehmergerät angehört, ankommenden Anruf zu übernehmen.

2. Verfahren nach Anspruch 1, **dadurch gekennzeichnet, dass** die knotenübergreifende Signalisierung über einen Presence Manager (PM) erfolgt.

3. Verfahren nach Anspruch 2, **dadurch gekennzeichnet, dass** der Presence Manager zur knotenübergreifenden Signalisierung anhand
- eines Ereignisses, welches ihm mit Hilfe einer Protokollspezifikation (CSTA) für den Datenverkehr zwischen wenigstens einer Telefonanlage und wenigstens einem auf einem Server (S) des Kommunikationssystems laufenden Computerprogramm gemeldet wird, und
- anhand wenigstens eines Zustandes wenigstens eines der beteiligten Teilnehmergeräte, prüft, ob wenigstens ein Zustand wenigstens einer Anzeigeeinrichtung wenigstens eines Teilnehmerendgerätes zu verändern ist.

4. Verfahren nach einem der vorhergehenden Ansprüche, **dadurch gekennzeichnet, dass** bei der Signalisierung nicht oder nicht nur physikalische sondern ausschließlich oder auch logische Identifikatoren übermittelt werden.

5. Verfahren nach einem der vorhergehenden Ansprüche, **dadurch gekennzeichnet, dass** eine Anzeigeeinrichtung verwendet wid, die in eine Baugruppe integriert ist, die auch ein Eingabeelement umfasst.

6. Verfahren nach einem der vorhergehenden Ansprüche, **dadurch gekennzeichnet, dass** die Anzeigeeinrichtung eine LED und das Eingabeelement eine Taste mit integrierter oder zugeordneter LED ist.

7. Einrichtung zur Durchführung eines Verfahrens oder zur Teilnahme an einem Verfahren zur knotenübergreifenden Nutzung von Gruppen-Leistungsmerkmalen in einem Kommunikationssystem nach einem der vorhergehenden Ansprüche.

8. Einrichtung nach Anspruch 7, **dadurch gekennzeichnet, dass** eine Anzeigeeinrichtung vorgesehen ist, die in eine Baugruppe integriert ist, die auch ein Eingabeelement umfasst.

9. Einrichtung nach Anspruch 8, **dadurch gekennzeichnet, dass** die Anzeigeeinrichtung eine LED und das Eingabeelement eine Taste mit integrierter LED ist.

10. Einrichtung nach einem der Ansprüche 7 bis 9, **dadurch gekennzeichnet, dass** diese Einrichtung ein Teilnehmergerät ist.
